# FASCICULE DE BREVET EUROPEEN

(11) **EP 3 464 828 B1**
(45) Date de publication et mention de la délivrance du brevet: **19.08.2020**
(21) Numéro de dépôt: 17729520.1
(22) Date de dépôt: 18.05.2017
(51) Int. Cl.: F01D 11/00, F01D 25/16, F02C 7/28

(54) **CARTER INTERMÉDIAIRE DE TURBOMACHINE, ÉQUIPÉE D'UNE PIÈCE D'ÉTANCHÉITÉ À L'INTERFACE BRAS/VIROLE**
TURBOMASCHINENZWISCHENGEHÄUSE MIT EINER DICHTUNGSKOMPONENTE AN DER ARM-SCHALEN-SCHNITTSTELLE
INTERMEDIATE TURBOMACHINE CASING, EQUIPPED WITH A SEALING COMPONENT AT THE ARM-SHELL INTERFACE

(30) Priorité: 31.05.2016 FR 1654918
(43) Date de publication de la demande: 10.04.2019
(73) Titulaire: Safran Aircraft Engines, 75015 Paris (FR)
(72) Inventeur: CHARBONNIER, Simon, Pierre, Claude, 77550 Moissy-Cramayel (FR); REGHEZZA, Patrick, Jean-Louis, 77550 Moissy-Cramayel (FR); ROSET, Julien, 77550 Moissy-Cramayel (FR); SARAZIN, Yann, Christophe, Maurice, 77550 Moissy-Cramayel (FR)
(74) Mandataire: Ernest Gutmann - Yves Plasseraud S.A.S.
(86) Numéro de dépôt international: PCT/FR2017/051215
(87) Numéro de publication internationale: WO 2017/207890

(56) Documents cités:
- WO-A1-2014/068222
- FR-A1- 2 958 680
- GB-A- 789 958

## Description

La présente invention se rapporte en général au domaine des turbomachines à double flux, et plus particulièrement à celui des carters intermédiaires équipant ces turbomachines. On pourra se référer aux brevets FR 2013/3010154, FR 2010/2968364, GB 789958 et FR 2958680 pour illustrer l'art antérieur se rapportant aux carters intermédiaires de turbomachines.

L'invention concerne une pièce d'étanchéité équipant ces carters intermédiaires permettant de rétablir la géométrie de contact entre les bras du carter et sa virole dans le cas où la virole en question a subi un usinage induisant une perte de matière à l'interface bras/virole.

Les turboréacteurs existants de conception à double flux comportent généralement un carter de soufflante prolongé vers l'aval par un carter intermédiaire.

Dans les ateliers de maintenance de ces turbomachines, le démontage de la virole de carter intermédiaire permet de constater sur cette pièce la présence de corrosion sur les zones de contact avec les bras de carter intermédiaire. Ces zones de corrosion doivent être caractérisées et éliminées avant le remontage du moteur.

La suppression de la corrosion augmente le jeu entre les bras et la virole de carter intermédiaire, ce qui détériore la qualité des contacts dans cette zone et modifie le comportement de l'assemblage. Ces changements rendent l'ensemble du système instable face à des chargements liés à la perte d'aube de soufflante.

Il peut arriver que les profondeurs des corrosions soient hors limites et que les viroles de carter intermédiaire soient alors hors service. C'est la raison pour laquelle une solution est proposée par la présente invention pour restaurer la géométrie de contact entre la virole et les bras de carter intermédiaire.

La présente invention vise à permettre de réparer un carter intermédiaire comprenant au moins un moyeu central et une virole reliés concentriquement par des bras structuraux, présentant des zones de corrosion au niveau de la virole.

A cet effet, il est proposé, en premier lieu, un carter intermédiaire de turbomachine, comprenant au moins un moyeu central et une virole disposés concentriquement, et reliés mécaniquement entre eux par des bras structuraux, ce carter comportant, en outre, au moins une pièce d'étanchéité fixée entre la virole et un bras structural, la pièce d'étanchéité comportant au moins une âme métallique et un joint.

La pièce d'étanchéité permet de revenir à la cote initiale. Elle augmente le coefficient de frottement de l'interface bras/virole, améliorant ainsi la tenue de l'assemblage face à des chargements liés à la perte d'aube de soufflante. Elle permet également d'améliorer la résistance de la liaison à la corrosion grâce à la présence du joint assurant une étanchéité pérenne. Une étanchéité supplémentaire est obtenue grâce à la bonne adéquation entre dureté et souplesse permettant de maitriser les déformations de la pièce.

Plusieurs caractéristiques supplémentaires peuvent être prévues, seules ou en combinaison. Ainsi, par ex. :
- la pièce d'étanchéité comporte un revêtement au-dessus de l'âme métallique.
- le revêtement a un coefficient de frottement compris entre 0,1 et 0,7.
- le revêtement a une épaisseur comprise entre 20 et 100 microns.
- la pièce d'étanchéité comporte un revêtement sous le joint.
- le revêtement a un coefficient de frottement compris entre 0,1 et 0,7.
- l'âme métallique a une épaisseur comprise entre 100 et 200 microns.
- l'âme métallique est composée d'aluminium ou d'acier.
- le joint est un joint à lèvres ou un joint à boules.
- le joint est un joint élastomère.
- le joint a une épaisseur comprise entre 1,1 mm et 1,5 mm

Il est proposé, en deuxième lieu, un procédé de réparation d'un carter intermédiaire, selon la revendication 11, comprenant au moins un moyeu central et une virole disposés concentriquement, reliés mécaniquement entre eux par des bras structuraux et présentant des zones de corrosion sur la virole, ce procédé comprenant les étapes suivantes :
- démontage de la virole ;
- identification des éventuelles zones corrodées ;
- traçage des profils sur les zones corrodées ;
- nettoyage des zones corrodées sur la virole ;
- usinage des zones corrodées sur une surface englobant toute la zone de contact entre la virole et le bras de carter ;
- montage du carter intermédiaire avec ajout des pièces d'étanchéité, entre les bras du carter et la virole, au niveau des zones usinées, la liaison étant réalisée par écrasement des pièces d'étanchéité entre les bras et la virole.

Lors du remontage du carter, l'écrasement de la pièce d'étanchéité à l'interface bras/virole permet de restaurer la géométrie de contact entre les bras et la virole.

D'autres objets et avantages de l'invention apparaîtront à la lumière de la description d'un mode de réalisation, faite ci-après en référence aux dessins annexés dans lesquels :
- La **FIG.1** est une représentation schématique d'une turbomachine à double flux sur laquelle est tracé un médaillon I correspondant à une zone d'intérêt mieux visible sur la **FIG.2****.**
- La **FIG.2** est une vue en perspective d'un carter intermédiaire de turbomachine sur laquelle est tracé un médaillon II correspondant à une zone d'intérêt mieux visible sur la **FIG.3****.**
- La **FIG.3** est une vue de détails de la zone II de la **FIG.2****.**
- La **FIG.4** illustre une zone de corrosion sur une virole de carter intermédiaire.
- La **FIG.5** illustre une zone usinée correspondant à une zone corrodée ayant subi un usinage induisant une perte de matière.
- La **FIG.6** est une vue en perspective d'une liaison entre un bras de carter intermédiaire et une virole comprenant une pièce d'étanchéité.
- La **FIG.7** est une vue en coupe d'une zone de l'assemblage du carter intermédiaire comprenant une pièce d'étanchéité selon un exemple de mode de réalisation, suivant le plan de coupe VI de la **FIG.6****.**
- La **FIG.8** est une vue de détail à plus grande échelle de la zone III de la **FIG.7****,** illustrant un exemple de mode de réalisation.

La **FIG.9** est une vue en perspective d'une liaison entre un bras de carter intermédiaire et une virole comprenant à l'interface une pièce d'étanchéité comportant un joint à boule, selon un exemple de mode de réalisation.

La **FIG.10** est une vue en coupe d'une liaison entre un bras de carter intermédiaire et une virole comprenant une pièce d'étanchéité comportant un joint à boule, selon un exemple de mode de réalisation, suivant le plan de coupe IX de la **FIG.9****.**

La **FIG.11** est une vue en coupe d'une liaison entre un bras de carter intermédiaire et une virole comprenant une pièce d'étanchéité selon un exemple de mode de réalisation.

La **FIG.12** est une vue en coupe d'une liaison entre un bras de carter intermédiaire et une virole comprenant une pièce d'étanchéité selon un exemple de mode de réalisation.

La **FIG.13** est une vue en coupe d'une liaison entre un bras de carter intermédiaire et une virole comprenant une pièce d'étanchéité selon un exemple de mode de réalisation.

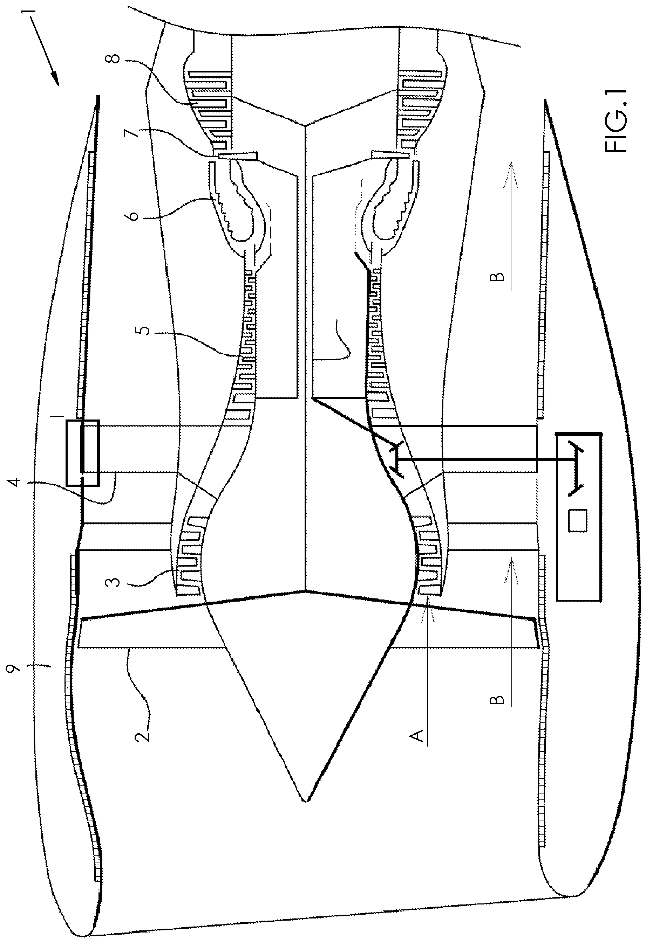

Sur la **FIG.1** est illustrée, de manière schématique, une turbomachine **1** à double flux. On a situé sur ce dessin un médaillon I qui localise une zone d'intérêt où est appliquée la présente invention. La turbomachine **1** comprend d'amont en aval un rotor de soufflante **2,** un compresseur basse pression **3,** un carter intermédiaire **4,** un compresseur haute pression **5,** une chambre de combustion **6,** une turbine haute pression **7** et une turbine basse pression **8.**

La turbomachine **1** comporte également une nacelle **9.** L'air entrant dans la turbomachine **1** se divise en un flux d'air primaire (flèche A) qui circule à l'intérieur des compresseurs, basse **3** et haute pression **5** vers la chambre de combustion **6** puis à travers les turbines, haute **7** et basse pression **8** et en un flux d'air secondaire (flèches B) qui contourne le compresseur **3,** la chambre de combustion **6** et la turbine 7.

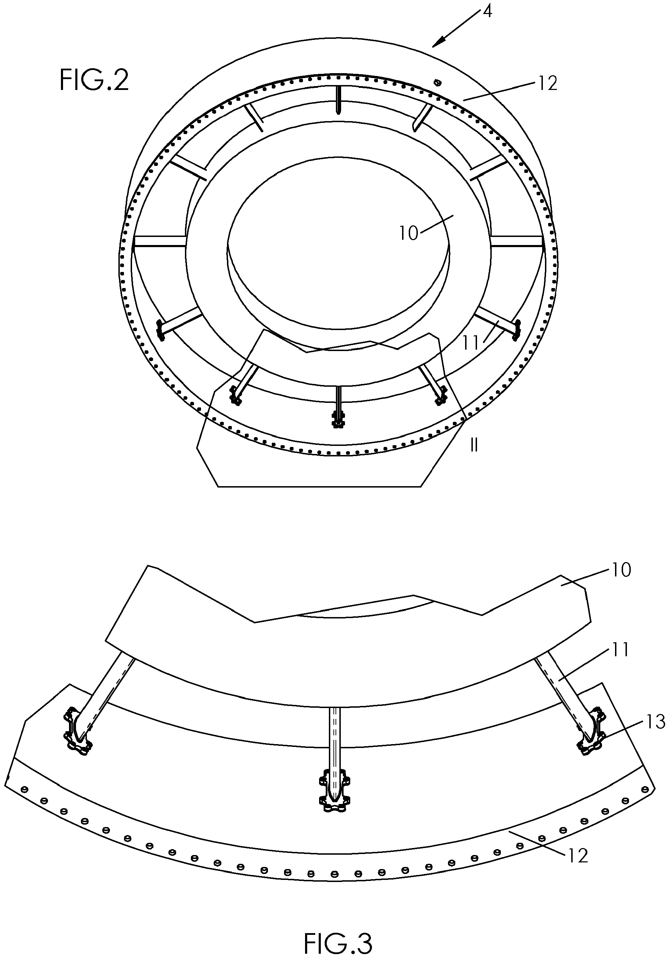

La **FIG.2** est une représentation schématique simplifiée d'un carter intermédiaire **4** équipant la turbomachine **1,** qui comprend un moyeu central **10,** des bras structuraux **11** et une virole **12** reliée au moyeu par les bras **11.**

La **FIG.3** est une vue de détails de la zone II de la **FIG.2** montrant trois interfaces bras/virole. La pièce d'étanchéité **13** est destinée à être positionnée entre un bras **11** et une virole **12.**

En fonctionnement, le carter **4** subit une corrosion, qui affecte notamment les bras **11** et plus particulièrement des zones **14** à l'interface entre, d'une part, les bras **11** et, d'autre part, le moyeu et/ou la virole **12.** Il doit être remédié à cette corrosion, car il n'est pas souhaitable de la laisser se propager.

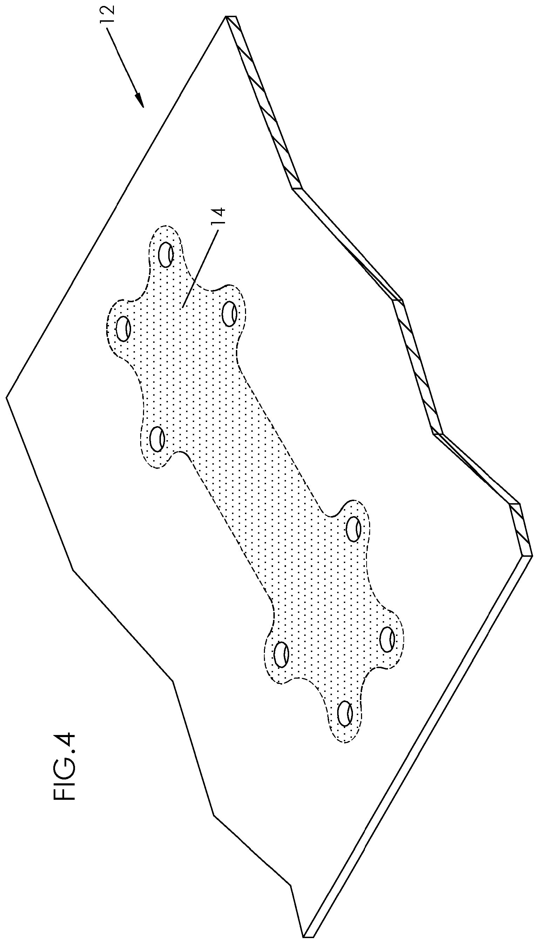

Une première étape consiste à démonter la virole **12** pour détecter les zones **14** de corrosion, ce qui est réalisé dans un atelier de maintenance **(****FIG.4****).**

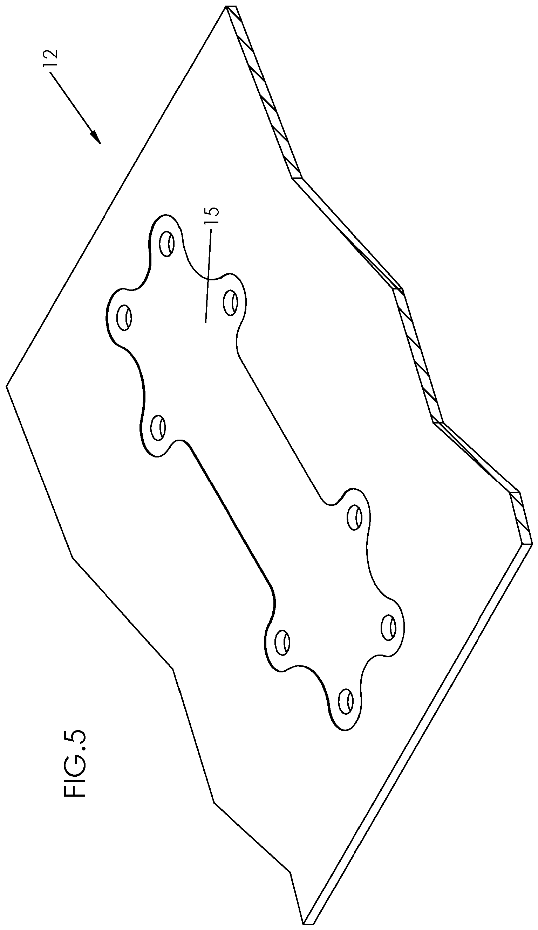

Une deuxième étape consiste à usiner les zones corrodées **14** identifiées, sur une surface englobant toute la zone de contact entre la virole **12** et un (ou plusieurs) bras **11** de carter. Le choix d'une telle surface permet de supprimer systématiquement la totalité de la corrosion par usinage. On obtient alors des zones usinées **15,** comme l'illustre la **FIG.5****.**

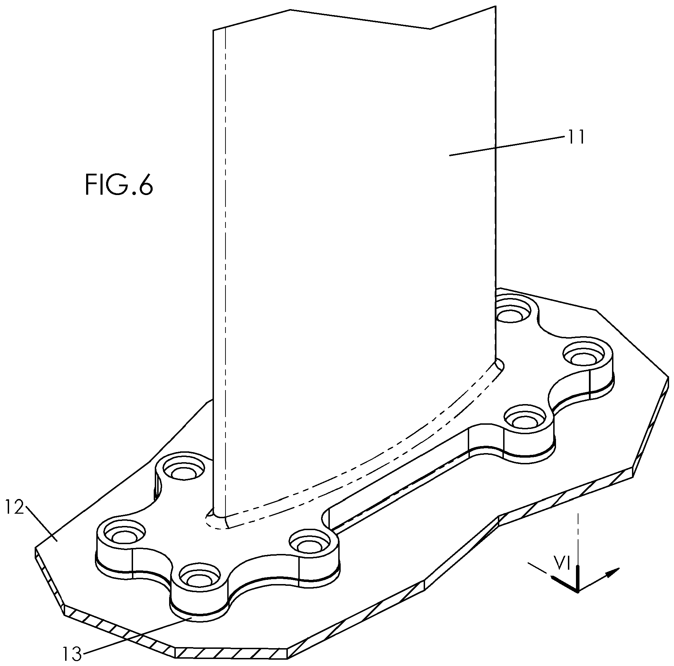

Pour rétablir la géométrie de contact entre un bras **11** de carter **4** et la virole **12,** une pièce d'étanchéité **13** est positionnée à l'interface bras/virole, comme l'illustre la **FIG.6****.**

Cette pièce d'étanchéité **13** permet de remplir plusieurs fonctions techniques :
- éviter la perte de surface de contact à l'interface bras **11**/virole **12** ;
- limiter le glissement entre les bras **11** et la virole **12** ;
- limiter la formation de corrosion à l'interface bras **11**/virole **12.**

Pour cela, la pièce d'étanchéité **13** comporte plusieurs couches répondant à des fonctions précises.

Les couches en contact avec les bras **11** de carter ou avec la virole **12** ont des coefficients de frottements élevés de manière à limiter le glissement relatif entre les bras **11** et la virole **12** de carter intermédiaire **4.** Ces coefficients de frottements doivent être compris entre 0,1 et 0,7 pour supporter d'éventuelles chargements induits par une perte d'aube de soufflante **2.**

Ces couches doivent toutefois avoir une certaine souplesse pour augmenter les surfaces de contact en épousant la géométrie des deux pièces en interface.

La pièce d'étanchéité **13** comporte une âme métallique **16** qui lui confère de bonnes propriétés de rigidité de manière à assurer la longévité de la réparation.

La pièce d'étanchéité **13** comporte un joint **17** intégré tout autour du profil de l'interface bras **11**/virole **12** pour assurer la bonne étanchéité de la liaison. Le rôle du joint **17** est d'empêcher la propagation d'air provenant du flux d'air secondaire B vers l'intérieur de la nacelle **9,** comme l'illustre la **FIG.1****.**

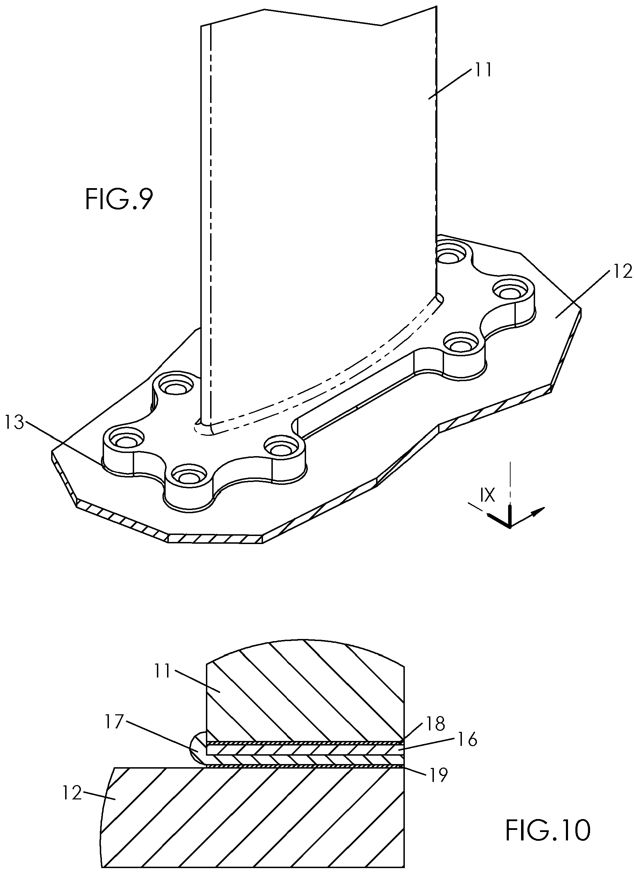

Selon quelques exemples de mode de réalisation, différents types de joints peuvent être utilisés, comme par exemple un joint élastomère, à lèvres ou à boules. Un exemple de réalisation avec un joint à boules est illustré par la **FIG.9** et la **FIG.10****.**

Afin d'obtenir une solution pérenne, il est nécessaire de garantir le bon serrage de la liaison en fonctionnement normal et de ne pas détériorer la tenue de l'assemblage sous un chargement lié une perte d'aube de soufflante **2.**

Pour que le serrage de la liaison soit optimal, les surfaces d'appui entre les bras **11** de carter intermédiaire **4** et la virole **12** ne doivent pas être réduites. Pour cela, la pièce d'étanchéité **13** a une épaisseur comprise entre 1,2mm et 1,5mm permettant de revenir au même positionnement relatif entre les deux pièces. Par ailleurs, La pièce d'étanchéité **13** est réalisée dans une matière suffisamment souple pour épouser les surfaces de contact entre les bras **11** et la virole **12.**

Le dimensionnement et la souplesse des matériaux choisis permettent de ne pas réduire les surfaces d'appuis et, avec un effort de serrage inchangé, de ne pas réduire les pressions de matage à la liaison.

Pour augmenter la tenue de l'assemblage dans l'hypothèse d'une perte d'aube, les surfaces de contact entre la virole **12** et les bras **11** de carter intermédiaire **4** ne doivent pas être réduites. En effet, sous un chargement lié à la perte d'aube de soufflante **2,** les surfaces d'appui glissent l'une par rapport à l'autre et mettent en cisaillement les vis de la liaison entre les bras **11** et la virole **12.** Pour dégager une marge suffisante, il est nécessaire de calibrer le coefficient de frottement des couches de la pièce d'étanchéité **13** en contact avec le bras **11** de carter et des couches en contact avec la virole 12.

Pour obtenir des conditions optimales limitant le glissement relatif entre les deux pièces en cas de perte d'aube de soufflante **2,** les couches en contact avec les bras **11** de carter doivent avoir un coefficient de frottement compris entre 0,1 et 0,7 et les couches en contact avec la virole **12** doivent avoir un coefficient de frottement compris entre 0,1 et 0,7.

Par ailleurs, le phénomène de corrosion à l'interface bras **11**/virole **12** étant fréquent, ce montage permet de limiter la formation de nouvelle corrosion dans la zone de contact. En effet :
- d'une part, la souplesse de la pièce d'étanchéité **13** lui permet de bien épouser les formes de mises en contact ;
- d'autre part, la présence d'un joint **17** dans la pièce **13,** entourant tout le pourtour de la liaison permet d'isoler la zone de contact de l'extérieur.

Cette dernière fonction remplie par la pièce **13** permet de stopper l'apparition de corrosion dans la zone de contact entre les bras 11 et la virole **12,** et améliore sensiblement le carter intermédiaire **4** sur ce point, une fois réparé, par rapport à la situation du carter intermédiaire **4** neuf.

Enfin, la pièce d'étanchéité **13** doit présenter une masse suffisamment faible pour le pas avoir d'impact sur le carter intermédiaire **4** et ainsi permettre d'utiliser les mêmes vis qu'avant la réparation. Une attention particulière est donc portée sur la géométrie de la pièce pour limiter son épaisseur qui ne doit pas excéder 1,5mm et sa masse qui ne doit pas excéder 80g

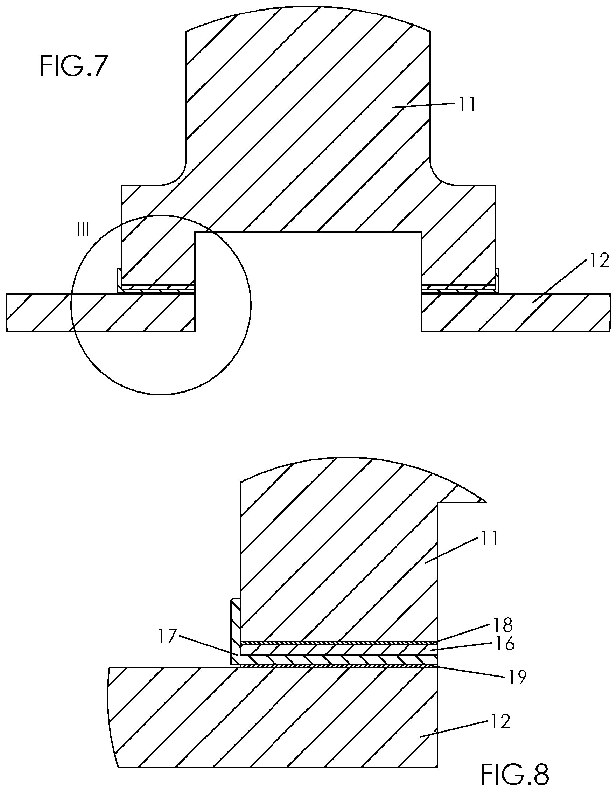

Selon un exemple de mode de réalisation illustré par la **FIG.7** et la **FIG.8****,** la pièce d'étanchéité **13** comporte, en plus de l'âme métallique **16** et du joint **17,** un revêtement supérieur **18** en contact avec le bras **11** de carter intermédiaire **4** et un revêtement inférieur **19** en contact avec la virole **12.** Les coefficients de frottement de ces deux revêtements **18, 19** peuvent être potentiellement différents : celui du revêtement supérieur **18** doit être compris entre 0,1 et 0,7 et celui du revêtement inférieur **19** doit être compris entre 0,1 et 0,7.

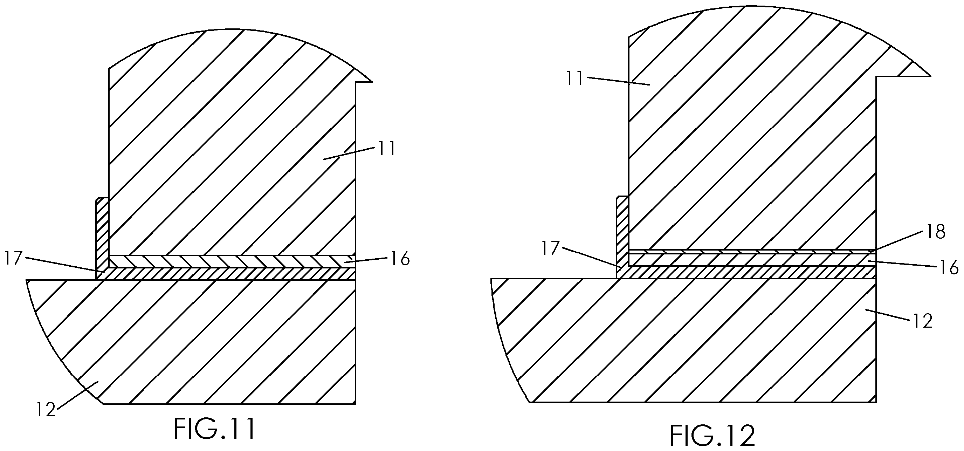

Selon un exemple de mode de réalisation illustré par la **FIG.11****,** la pièce d'étanchéité **13** comprend une âme métallique **16** et un joint **17.** Selon un autre mode de réalisation non illustré, l'âme métallique **16** et le joint **17** peuvent être confondus.

Selon un exemple de mode de réalisation illustré par la **FIG.12****,** la pièce comporte en plus de l'âme métallique **16** et du joint **17** un revêtement supérieur **18** en contact avec le bras **11** du carter intermédiaire **4.** Ce revêtement supérieur **18** a une épaisseur comprise entre 20 et 100 microns et un coefficient de frottement compris entre 0,1 et 0,7.

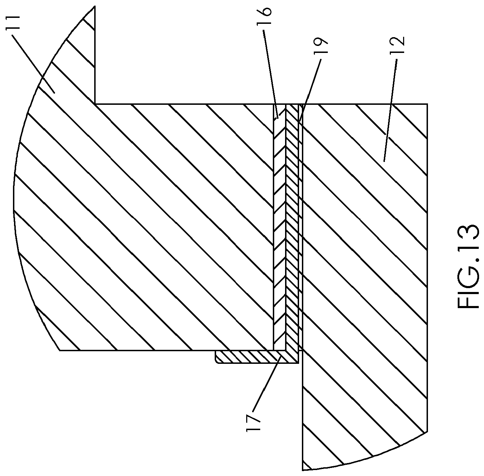

Selon un exemple de mode de réalisation illustré par la **FIG.13****,** la pièce d'étanchéité **13** comporte en plus de l'âme métallique **16** et du joint **17,** un revêtement inférieur **19** en contact avec la virole **12.** Ce revêtement inférieur **19** a une épaisseur comprise entre 20 et 100 microns et un coefficient de frottement compris entre 0,1 et 0,7.

## Revendications

1. Carter intermédiaire **(4)** de turbomachine **(1),** comprenant au moins un moyeu central **(10)** et une virole **(12)** disposés concentriquement, et reliés mécaniquement entre eux par des bras structuraux **(11), caractérisé en ce qu'**il comporte au moins une pièce d'étanchéité **(13)** fixée entre la virole **(12)** et un bras structural **(11),** la pièce d'étanchéité **(13)** comportant au moins une âme métallique **(16)** et un joint **(17),** la pièce d'étanchéité **(13)** comportant un revêtement supérieur **(18)** en contact avec le bras **(11)** et/ou un revêtement inférieur (19) en contact avec la virole **(12).**

2. Carter intermédiaire **(4)** de turbomachine **(1)** selon la revendication 1, comportant le revêtement supérieur **(18), caractérisé en ce que** le revêtement supérieur **(18)** a un coefficient de frottement compris entre 0,1 et 0,7.

3. Carter intermédiaire **(4)** de turbomachine **(1)** selon l'une quelconque des revendications 1 ou 2, comportant le revêtement supérieur **(18), caractérisé en ce que** le revêtement supérieur **(18)** a une épaisseur comprise entre 20 et 100 microns.

4. Carter intermédiaire **(4)** de turbomachine **(1)** selon l'une des revendications 1 à 3, comportant le revêtement inférieur **(19), caractérisé en ce que** le revêtement inférieur **(19)** a un coefficient de frottement compris entre 0,1 et 0,7.

5. Carter intermédiaire **(4)** de turbomachine **(1)** selon l'une quelconque des revendications 1 à 4, comportant le revêtement inférieur **(19), caractérisé en ce que** le revêtement inférieur **(19)** a une épaisseur comprise entre 20 et 100 microns.

6. Carter intermédiaire **(4)** de turbomachine **(1)** selon l'une quelconque des revendications 1 à 5, **caractérisé en ce que** l'âme métallique **(16)** a une épaisseur comprise entre 100 et 200 microns.

7. Carter intermédiaire **(4)** de turbomachine **(1)** selon l'une quelconque des revendications 1 à 6, **caractérisé en ce que** l'âme métallique **(16)** est composée d'aluminium ou d'acier.

8. Carter intermédiaire **(4)** de turbomachine **(1)** selon l'une quelconque des revendications 1 à 7, **caractérisé en ce que** le joint **(17)** est un joint à lèvres ou un joint à boules.

9. Carter intermédiaire **(4)** de turbomachine **(1)** selon l'une quelconque des revendications 1 à 8, **caractérisé en ce que** le joint **(17)** est un joint élastomère.

10. Carter intermédiaire **(4)** de turbomachine **(1),** selon l'une quelconque des revendications 1 à 9, **caractérisé en ce que** le joint **(17)** a une épaisseur comprise entre 1,1 mm et 1,5 mm.

11. Procédé de réparation d'un carter intermédiaire **(4)** comprenant au moins un moyeu central **(10)** et une virole **(12)** disposés concentriquement, reliés mécaniquement entre eux par des bras structuraux **(11)** et présentant des zones de corrosion sur la virole **(12),** ce procédé étant **caractérisé en ce qu'**il comprend les étapes suivantes :
- démontage de la virole **(12)** ;
- identification des éventuelles zones corrodées **(14)** ;
- traçage des profils sur les zones corrodées **(14)** ;
- nettoyage des zones corrodées **(14)** sur la virole **(12)** ;
- usinage des zones corrodées **(14)** sur une surface englobant toute la zone de contact entre la virole **(12)** et le bras **(11)** de carter ;
- montage du carter intermédiaire **(4)** avec ajout des pièces d'étanchéité, entre les bras **(11)** du carter et la virole **(12),** au niveau des zones usinées **(15),** la liaison étant réalisée par écrasement des pièces d'étanchéité entre les bras **(11)** et la virole **(12),** chaque pièce d'étanchéité **(13)** comportant un revêtement supérieur **(18)** en contact avec le bras **(11)** et/ou un revêtement inférieur **(19)** en contact avec la virole **(12).**

## Patentansprüche

1. Zwischengehäuse (4) für Turbomaschinen bzw. Turbotriebwerke (1), das zumindest eine zentrale Nabe (10) und einen Mantelring (12) enthält, die konzentrisch angeordnet und durch Strukturarme (11) mechanisch miteinander verbunden sind, **dadurch gekennzeichnet, dass** es zumindest ein Dichtungsteil (13) aufweist, das zwischen dem Mantelring (12) und einem Strukturarm (11) befestigt ist, wobei das Dichtungsteil (13) zumindest einen Metallsteg (16) und eine Dichtung (17) aufweist, wobei das Dichtungsteil (13) eine obere Beschichtung (18) in Kontakt mit dem Arm (11) und/oder eine untere Beschichtung (19) in Kontakt mit dem Mantelring (12) aufweist.

2. Zwischengehäuse (4) für Turbomaschinen bzw. Turbotriebwerke (1) nach Anspruch 1, enthaltend eine obere Beschichtung (18), **dadurch gekennzeichnet, dass** die obere Beschichtung (18) einen Reibungskoeffizienten zwischen 0,1 und 0,7 aufweist.

3. Zwischengehäuse (4) für Turbomaschinen bzw. Turbotriebwerke (1) nach einem der Ansprüche 1 oder 2, enthaltend eine obere Beschichtung (18), **dadurch gekennzeichnet, dass** die obere Beschichtung (18) eine Dicke zwischen 20 und 100 Mikrometer aufweist.

4. Zwischengehäuse (4) für Turbomaschinen bzw. Turbotriebwerke (1) nach einem der Ansprüche 1 bis 3, enthaltend eine untere Beschichtung (19), **dadurch gekennzeichnet, dass** die untere Beschichtung (19) einen Reibungskoeffizienten zwischen 0,1 und 0,7 aufweist.

5. Zwischengehäuse (4) für Turbomaschinen bzw. Turbotriebwerke (1) nach einem der Ansprüche 1 bis 4, enthaltend eine untere Beschichtung (19), **dadurch gekennzeichnet, dass** die untere Beschichtung (19) eine Dicke zwischen 20 und 100 Mikrometer aufweist.

6. Zwischengehäuse (4) für Turbomaschinen bzw. Turbotriebwerke (1) nach einem der Ansprüche 1 bis 5, **dadurch gekennzeichnet, dass** der Metallsteg (16) eine Dicke zwischen 100 und 200 Mikrometer aufweist.

7. Zwischengehäuse (4) für Turbomaschinen bzw. Turbotriebwerke (1) nach einem der Ansprüche 1 bis 6, **dadurch gekennzeichnet, dass** der Metallsteg (16) aus Aluminium oder Stahl besteht.

8. Zwischengehäuse (4) für Turbomaschinen bzw. Turbotriebwerke (1) nach einem der Ansprüche 1 bis 7, **dadurch gekennzeichnet, dass** die Dichtung (17) eine Lippendichtung oder eine Kugeldichtung ist.

9. Zwischengehäuse (4) für Turbomaschinen bzw. Turbotriebwerke (1) nach einem der Ansprüche 1 bis 8, **dadurch gekennzeichnet, dass** die Dichtung (17) eine Elastomerdichtung ist.

10. Zwischengehäuse (4) für Turbomaschinen bzw. Turbotriebwerke (1) nach einem der Ansprüche 1 bis 9, **dadurch gekennzeichnet, dass** die Dichtung (17) eine Dicke zwischen 1,1 mm und 1,5 mm aufweist.

11. Verfahren zur Reparatur eines Zwischengehäuses (4), das zumindest eine zentrale Nabe (10) und einen Mantelring (12) aufweist, die konzentrisch angeordnet und durch Strukturarme (11) mechanisch miteinander verbunden sind, und das Korrosionsbereiche am Mantelring (12) aufweist, wobei dieses Verfahren **dadurch gekennzeichnet ist, dass** es die folgenden Schritte umfasst:
- Demontieren des Mantelrings (12);
- Identifizieren von eventuellen korrodierten Bereichen (14);
- Anreißen der Profile an den korrodierten Bereichen (14);
- Reinigen der korrodierten Bereiche (14) an dem Mantelring (12);
- Bearbeiten der korrodierten Bereiche (14) an einer den gesamten Kontaktbereich zwischen dem Mantelring (12) und dem Gehäusearm (11) überdeckenden Fläche;
- Anbringen des Zwischengehäuses (4) unter Hinzufügen der Dichtungsteile zwischen den Gehäusearmen (11) und dem Mantelring (12) im Bereich der bearbeiteten Bereiche (15), wobei die Verbindung durch Quetschen der Dichtungsteile zwischen den Gehäusearmen (11) und dem Mantelring (12) hergestellt wird, wobei jedes Dichtungsteil (13) eine obere Beschichtung (18) in Kontakt mit dem Arm (11) und/oder eine untere Beschichtung (19) in Kontakt mit dem Mantelring (12) aufweist.

## Claims

1. An intermediate casing **(4)** for a turbine engine **(1),** comprising at least one central hub **(10)** and one shroud **(12)** which are positioned concentrically, and mutually mechanically connected by structural arms **(11), characterized in that** it comprises at least one sealing part (13) attached between the shroud **(12)** and one structural arm (11), with the sealing part **(13)** including at least one metal core **(16)** and one seal **(17),** with the sealing part **(13)** including an upper coating **(18)** in contact with the arm **(11)** and/or a lower coating **(19)** in contact with the shroud **(12).**

2. An intermediate casing **(4)** for a turbine engine **(1)** according to claim 1, **characterized in that** the upper coating **(18)** has a coefficient of friction from 0.1 to 0.7.

3. An intermediate casing **(4)** for a turbine engine **(1)** according to any one of claims 1 or 2, **characterized in that** the upper coating **(18)** has a thickness from 20 to 100µm.

4. An intermediate casing **(4)** for a turbine engine **(1)** according to one of claims 1 to 3, **characterized in that** the lower coating **(19)** has a coefficient of friction from 0.1 to 0.7.

5. An intermediate casing **(4)** for a turbine engine **(1)** according to any one of claims 1 to 4, **characterized in that** the lower coating **(19)** has a thickness from 20 to 100µm.

6. An intermediate casing **(4)** for a turbine engine **(1)** according to any one of claims 1 to 5, **characterized in that** the metal core **(16)** has a thickness from 100 to 200µm.

7. An intermediate casing **(4)** for a turbine engine **(1)** according to any one of claims 1 to 6, **characterized in that** the metal core **(16)** is made of aluminium or steel.

8. An intermediate casing **(4)** for a turbine engine **(1)** according to any one of claims 1 to 7, **characterized in that** the seal **(17)** is a lip seal or a ball seal.

9. An intermediate casing **(4)** for a turbine engine **(1)** according to any one of claims 1 to 8, **characterized in that** the seal **(17)** is an elastomer seal.

10. An intermediate casing **(4)** for a turbine engine **(1)** according to any one of claims 1 to 9, **characterized in that** the seal **(17)** has a thickness from 1.1 mm to 1.5mm.

11. A method for repairing an intermediate casing **(4)** comprising at least one central hub **(10)** and one shroud **(12)** which are positioned concentrically, and mutually mechanically connected by structural arms **(11),** and with the shroud **(12)** showing corroded areas, with such method being **characterized in that** it comprises the following steps:
- dismounting of the shroud **(12);**
- identification of the corroded areas **(14),** if any;
- tracing of the profiles of the corroded areas **(14);**
- cleaning of the corroded areas **(14)** on the shroud **(12);**
- machining of the corroded areas **(14)** on a surface surrounding the whole area of contact between the shroud **(12)** and the arm **(11)** of the casing;
mounting of the intermediate casing **(4)** and positioning of the sealing parts between the arms (11) of the casing and the shroud **(12),** at the machined areas **(15),** with binding being provided by crushing the sealing parts between the arms **(11)** and the shroud **(12).**
